# EUROPEAN PATENT SPECIFICATION

(11) **EP 2 798 183 B1**
(45) Date of publication and mention of the grant of the patent: **02.12.2020**
(21) Application number: 12872281.6
(22) Date of filing: 28.12.2012
(51) Int. Cl.: F02K 1/00, F02C 3/10, F02C 6/00, F02C 1/06, F02C 3/00, F02C 7/275, F01D 5/14, F01D 17/16, F02K 1/09, F02K 1/16, F02C 7/36, F02C 9/20, F04D 29/56

(54) **GAS TURBINE ENGINE WITH LOW FAN PRESSURE RATIO**
GASTURBINENMOTOR MIT NIEDRIGEM LÜFTERDRUCKVERHÄLTNIS
TURBOMOTEUR À FAIBLE RAPPORT DE PRESSION DE SOUFFLANTE

(30) Priority: 30.12.2011 US 201113340761
(43) Date of publication of application: 05.11.2014
(73) Proprietor: United Technologies Corporation, Farmington, CT 06032 (US)
(72) Inventor: SMITH, Peter G., Wallingford, Connecticut 06492 (US); OCHS, Stuart S., Coventry, Connecticut 06238 (US); SCHWARZ, Frederick M., Glastonbury, Connecticut 06033 (US)
(74) Representative: Dehns
(86) International application number: PCT/US2012/071901
(87) International publication number: WO 2013/141930

(56) References cited:
- EP-A2- 2 022 949
- WO-A1-2008/045058
- US-A- 5 655 360
- US-A1- 2006 179 818
- US-A1- 2006 228 206
- US-A1- 2008 155 961
- US-A1- 2009 277 155
- US-A1- 2011 120 078
- US-B2- 7 721 549

## Description

### BACKGROUND OF THE INVENTION

The present invention relates to a gas turbine engine, and more particularly to a turbofan engine having a variable geometry fan exit guide vane (FEGV) system to change a fan bypass flow path area thereof.

Conventional gas turbine engines generally include a fan section and a core section with the fan section having a larger diameter than that of the core section. The fan section and the core section are disposed about a longitudinal axis and are enclosed within an engine nacelle assembly. Combustion gases are discharged from the core section through a core exhaust nozzle while an annular fan bypass flow, disposed radially outward of the primary core exhaust path, is discharged along a fan bypass flow path and through an annular fan exhaust nozzle. A majority of thrust is produced by the bypass flow while the remainder is provided from the combustion gases.

The fan bypass flow path is a compromise suitable for take-off and landing conditions as well as for cruise conditions. A minimum area along the fan bypass flow path determines the maximum mass flow of air. During engine-out conditions, insufficient flow area along the bypass flow path may result in significant flow spillage and associated drag. The fan nacelle diameter is typically sized to minimize drag during these engine-out conditions which results in a fan nacelle diameter that is larger than necessary at normal cruise conditions with less than optimal drag during portions of an aircraft mission.

Prior art gas turbine engines are disclosed in US-2009/0277155 and EP-2022949.

### SUMMARY OF THE INVENTION

According to the present invention, there is provided a gas turbine engine as claimed in claim 1.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a general schematic partial fragmentary view of an exemplary gas turbine engine embodiment for use with the present invention;
Figure 1B is a perspective side partial fragmentary view of a FEGV system which provides a fan variable area nozzle;
Figure 2A is a sectional view of a single FEGV airfoil;
Figure 2B is a sectional view of the FEGV illustrated in Figure 2A shown in a first position;
Figure 2C is a sectional view of the FEGV illustrated in Figure 2A shown in a rotated position;
Figure 3A is a sectional view of another embodiment of a single FEGV airfoil;
Figures 3B is a sectional view of the FEGV illustrated in Figure 3A shown in a first position;
Figure 3C is a sectional view of the FEGV illustrated in Figure 3A shown in a rotated position;
Figure 4A is a sectional view of another embodiment of a single FEGV slatted airfoil with a ;
Figures 4B is a sectional view of the FEGV illustrated in Figure 4A shown in a first position; and
Figure 4C is a sectional view of the FEGV illustrated in Figure 4A shown in a rotated position.

### DETAILED DESCRIPTION OF THE DISCLOSED EMBODIMENT

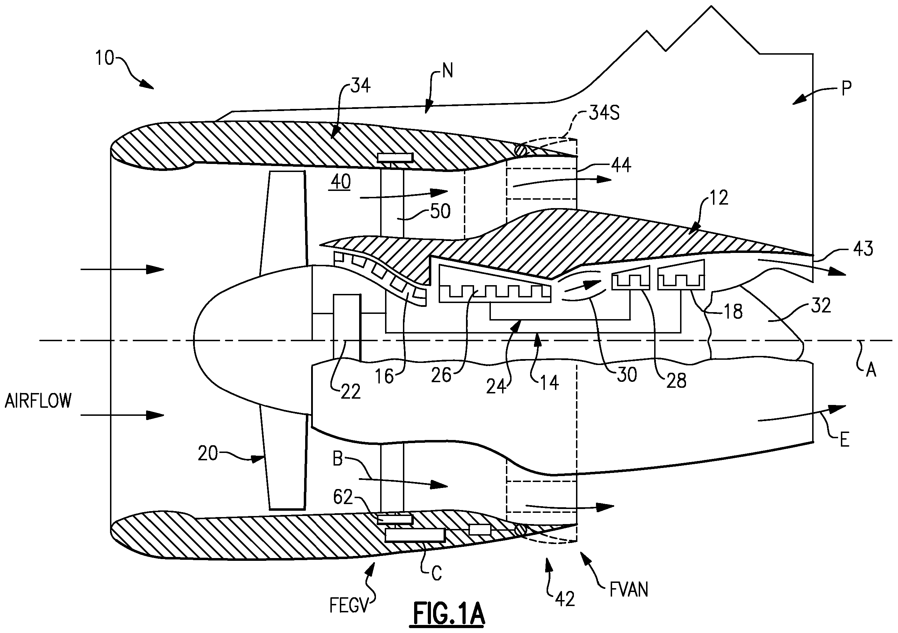

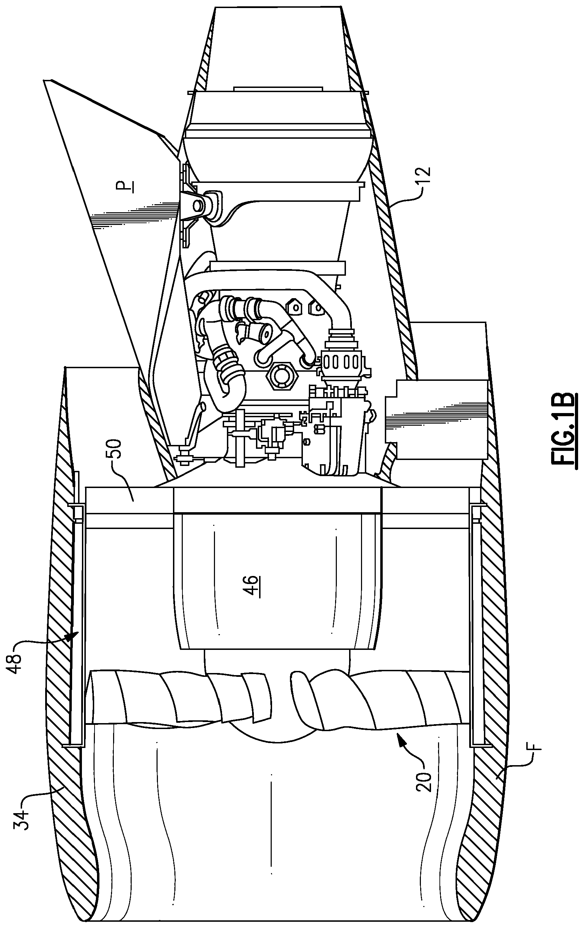

Figure 1 illustrates a general partial fragmentary schematic view of a gas turbofan engine 10 suspended from an engine pylon P within an engine nacelle assembly N as is typical of an aircraft designed for subsonic operation.

The turbofan engine 10 includes a core section within a core nacelle 12 that houses a low spool 14 and high spool 24. The low spool 14 includes a low pressure compressor 16 and low pressure turbine 18. The low spool 14 drives a fan section 20 directly or through a gear train 22. The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

The engine 10 is a high-bypass geared architecture aircraft engine. In one disclosed, nonlimiting embodiment, the engine 10 bypass ratio is greater than about six (6:1), with an example embodiment being greater than about ten (10:1), the gear train 22 is an epicyclic gear train such as a planetary gear system or other gear system with a gear reduction ratio of greater than about 2.3 and the low pressure turbine 18 has a pressure ratio that is greater than about five (5:1). The engine 10 in the disclosed embodiment is a high-bypass geared turbofan aircraft engine in which the engine 10 bypass ratio is greater than ten (10:1), the turbofan diameter is significantly larger than that of the low pressure compressor 16, and the low pressure turbine 18 has a pressure ratio greater than five (5:1). Low pressure turbine 18 pressure ratio is pressure measured prior to inlet of low pressure turbine 18 as related to the pressure at the outlet of the low pressure turbine 18 prior to exhaust nozzle. The gear train 22 may be an epicycle gear train such as a planetary gear system or other gear system with a gear reduction ratio of greater than about 2.5. It should be understood, however, that the above parameters are exemplary of only one geared turbofan engine and that the present invention is likewise applicable to other gas turbine engines including direct drive turbofans.

Airflow enters a fan nacelle 34, which may at least partially surround the core nacelle 12. The fan section 20 communicates airflow into the core nacelle 12 for compression by the low pressure compressor 16 and the high pressure compressor 26. Core airflow compressed by the low pressure compressor 16 and the high pressure compressor 26 is mixed with the fuel in the combustor 30 then expanded over the high pressure turbine 28 and low pressure turbine 18. The turbines 28, 18 are coupled for rotation with respective spools 24, 14 to rotationally drive the compressors 26, 16 and, through the gear train 22, the fan section 20 in response to the expansion. A core engine exhaust E exits the core nacelle 12 through a core nozzle 43 defined between the core nacelle 12 and a tail cone 32.

A bypass flow path 40 is defined between the core nacelle 12 and the fan nacelle 34. The engine 10 generates a high bypass flow arrangement with a bypass ratio in which approximately 80 percent of the airflow entering the fan nacelle 34 becomes bypass flow B. The bypass flow B communicates through the generally annular bypass flow path 40 and may be discharged from the engine 10 through a fan variable area nozzle (FVAN) 42 which defines a variable fan nozzle exit area 44 between the fan nacelle 34 and the core nacelle 12 at an aft segment 34S of the fan nacelle 34 downstream of the fan section 20.

Referring to Figure 1B, the core nacelle 12 is generally supported upon a core engine case structure 46. A fan case structure 48 is defined about the core engine case structure 46 to support the fan nacelle 34. The core engine case structure 46 is secured to the fan case 48 through a multiple of circumferentially spaced radially extending fan exit guide vanes (FEGV) 50. The fan case structure 48, the core engine case structure 46, and the multiple of circumferentially spaced radially extending fan exit guide vanes 50 which extend therebetween is typically a complete unit often referred to as an intermediate case. It should be understood that the fan exit guide vanes 50 may be of various forms. The intermediate case structure in the disclosed embodiment includes a variable geometry fan exit guide vane (FEGV) system 36.

Thrust is a function of density, velocity, and area. One or more of these parameters can be manipulated to vary the amount and direction of thrust provided by the bypass flow B. A significant amount of thrust is provided by the bypass flow B due to the high bypass ratio. The fan section 20 of the engine 10 is nominally designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without the fan exit guide vane (FEGV) system 36. The low fan pressure ratio as disclosed herein is less than 1.45. "Low corrected fan tip speed" is the actual fan tip speed in ft/sec divided by an industry standard temperature correction of [(Tambient deg R) / 518.7)^0.5]. (wherein 1 degree R = 0.556 degree K). The "Low corrected fan tip speed" as disclosed herein is less than 1150 ft / second (350.5 m/s).

As the fan section 20 is efficiently designed at a particular fixed stagger angle for an efficient cruise condition, the FEGV system 36 and/or the FVAN 42 is operated to adjust fan bypass air flow such that the angle of attack or incidence of the fan blades is maintained close to the design incidence for efficient engine operation at other flight conditions, such as landing and takeoff. The FEGV system 36 and/or the FVAN 42 may be adjusted to selectively adjust the pressure ratio of the bypass flow B in response to a controller C. For example, increased mass flow during windmill or engine-out, and spoiling thrust at landing. Furthermore, the FEGV system 36 will facilitate and in some instances replace the FVAN 42, such as, for example, variable flow area is utilized to manage and optimize the fan operating lines which provides operability margin and allows the fan to be operated near peak efficiency which enables a low fan pressure-ratio and low fan tip speed design; and the variable area reduces noise by improving fan blade aerodynamics by varying blade incidence. The FEGV system 36 thereby provides optimized engine operation over a range of flight conditions with respect to performance and other operational parameters such as noise levels.

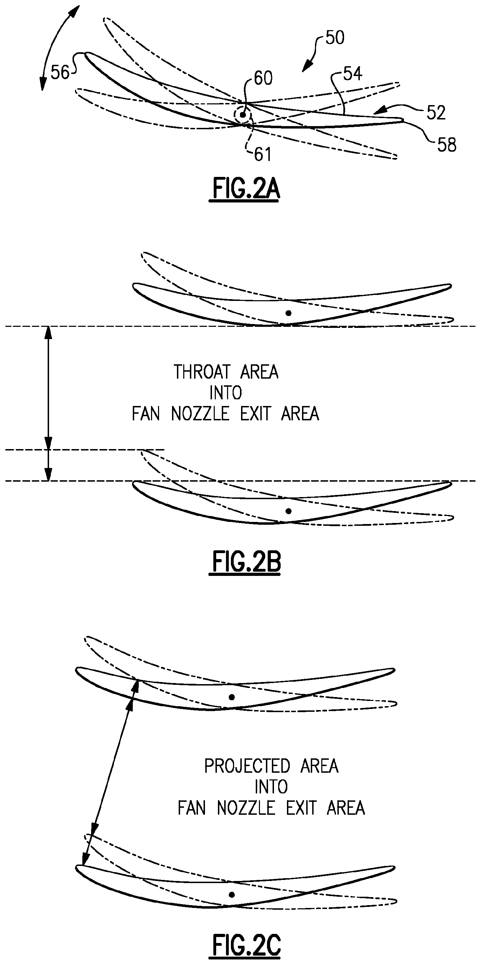

Referring to Figure 2A, each fan exit guide vane 50 includes a respective airfoil portion 52 defined by an outer airfoil wall surface 54 between the leading edge 56 and a trailing edge 58. The outer airfoil wall 54 typically has a generally concave shaped portion forming a pressure side and a generally convex shaped portion forming a suction side. It should be understood that respective airfoil portion 52 defined by the outer airfoil wall surface 54 may be generally equivalent or separately tailored to optimize flow characteristics.

Each fan exit guide vane 50 is mounted about a vane longitudinal axis of rotation 60. The vane axis of rotation 60 is typically transverse to the engine axis A, or at an angle to engine axis A. It should be understood that various support struts 61 or other such members may be located through the airfoil portion 52 to provide fixed support structure between the core engine case structure 46 and the fan case structure 48. The axis of rotation 60 may be located about the geometric center of gravity (CG) of the airfoil cross section. An actuator system 62 (illustrated schematically; Figure 1A), for example only, a unison ring operates to rotate each fan exit guide vane 50 to selectively vary the fan nozzle throat area (Figure 2B). The unison ring may be located, for example, in the intermediate case structure such as within either or both of the core engine case structure 46 or the fan case 48 (Figure 1A).

In operation, the FEGV system 36 communicates with the controller C to rotate the fan exit guide vanes 50 and effectively vary the fan nozzle exit area 44. Other control systems including an engine controller or an aircraft flight control system may also be usable with the present invention. Rotation of the fan exit guide vanes 50 between a nominal position and a rotated position selectively changes the fan bypass flow path 40. That is, both the throat area (Figure 2B) and the projected area (Figure 2C) are varied through adjustment of the fan exit guide vanes 50. By adjusting the fan exit guide vanes 50 (Figure 2C), bypass flow B is increased for particular flight conditions such as during an engine-out condition. Since less bypass flow will spill around the outside of the fan nacelle 34, the maximum diameter of the fan nacelle required to avoid flow separation may be decreased. This will thereby decrease fan nacelle drag during normal cruise conditions and reduce weight of the nacelle assembly. Conversely, by closing the FEGV system 36 to decrease flow area relative to a given bypass flow, engine thrust is significantly spoiled to thereby minimize or eliminate thrust reverser requirements and further decrease weight and packaging requirements. It should be understood that other arrangements as well as essentially infinite intermediate positions are likewise usable with the present invention.

By adjusting the FEGV system 36 in which all the fan exit guide vanes 50 are moved simultaneously, engine thrust and fuel economy are maximized during each flight regime. By separately adjusting only particular fan exit guide vanes 50 to provide an asymmetrical fan bypass flow path 40, engine bypass flow may be selectively vectored to provide, for example only, trim balance, thrust controlled maneuvering, enhanced ground operations and short field performance.

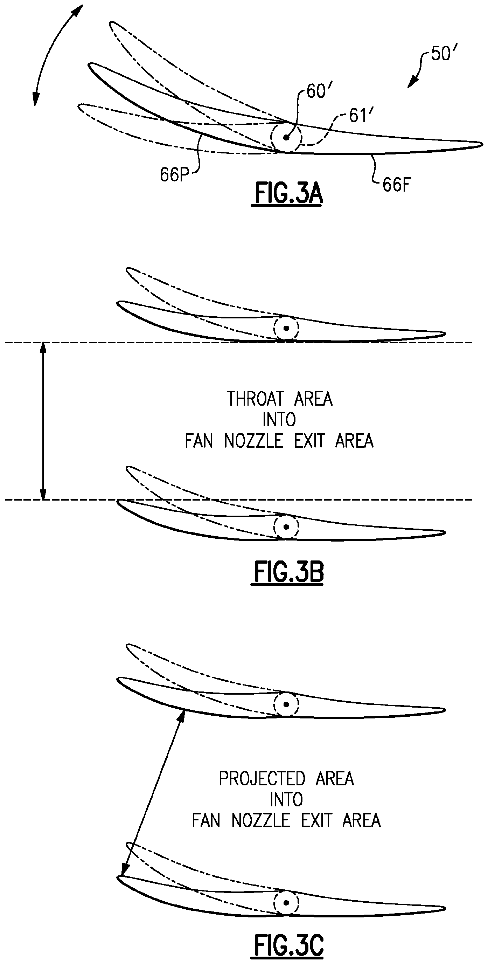

Referring to Figure 3A, another embodiment of the FEGV system 36' includes a multiple of fan exit guide vane 50' which each includes a fixed airfoil portion 66F and pivoting airfoil portion 66P which pivots relative to the fixed airfoil portion 66F. The pivoting airfoil portion 66P may include a leading edge flap which is actuatable by an actuator system 62' as described above to vary both the throat area (Figure 3B) and the projected area (Figure 3C).

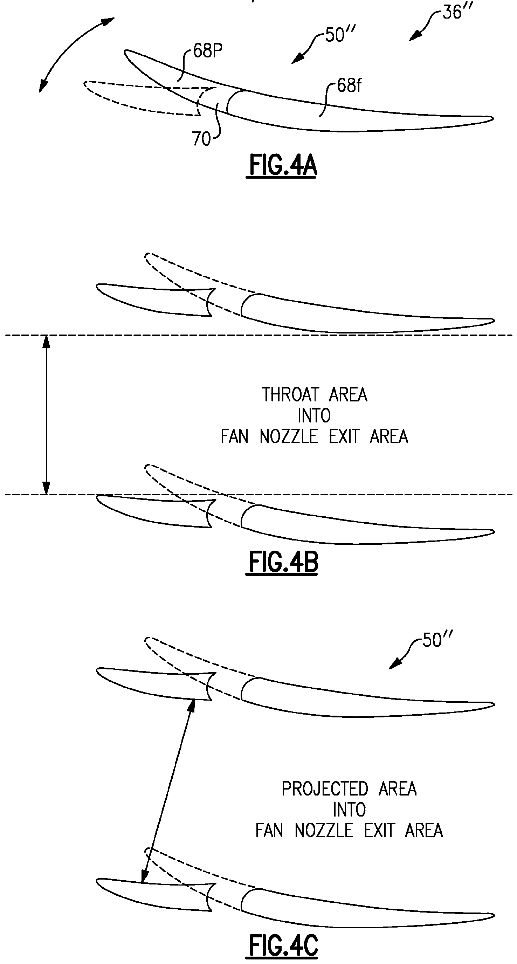

Referring to Figure 4A, another embodiment of the FEGV system 36" includes a multiple of slotted fan exit guide vane 50" which each includes a fixed airfoil portion 68F and pivoting and sliding airfoil portion 68P which pivots and slides relative to the fixed airfoil portion 68F to create a slot 70 vary both the throat area (Figure 4B) and the projected area (Figure 4C) as generally described above. This slatted vane method not only increases the flow area but also provides the additional benefit that when there is a negative incidence on the fan exit guide vane 50" allows air flow from the high-pressure, convex side of the fan exit guide vane 50" to the lower-pressure, concave side of the fan exit guide vane 50" which delays flow separation.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A gas turbine engine (10) comprising:
a core nacelle (12) defined about an engine centerline axis (A);
a fan nacelle (34) mounted at least partially around said core nacelle (12) to define a fan bypass airflow path (B) for a fan bypass airflow (B) having a bypass ratio greater than six;
a gear system driven by a core engine within the core nacelle to drive a fan within the fan nacelle (34), wherein said gear system defines a gear reduction ratio of greater than or equal to about 2.3;
a fan variable area nozzle (42);
a multiple of fan exit guide vanes (50) in communication with said fan bypass flow path (B), said multiple of fan exit guide vanes (50) rotatable about an axis of rotation (A); and
a controller (C) operable to control the fan variable area nozzle (42) to vary the fan nozzle exit area and adjust the pressure ratio of the fan bypass airflow (B);
**characterized in that**:
the fan pressure ratio is less than 1.45 at cruise at 0.8 Mach and 35,000 ft (10,668 m);
said fan defines a corrected fan tip speed less than 1150 ft / second (350.5 m/s);
said fan variable area nozzle (42) is axially movable relative said fan nacelle (34) to vary a fan nozzle exit area and adjust a pressure ratio of the fan bypass airflow (B) during engine operation; and
said controller (C) is operable to reduce said fan nozzle exit area (44) at a cruise flight condition.

2. The engine (10) as recited in claim 1, wherein said multiple of fan exit guide vanes (50) are simultaneously rotatable.

3. The engine (10) as recited in claim 1 or 2, wherein said multiple of fan exit guide vanes (50) are mounted within an intermediate engine case structure.

4. The engine (10) as recited in claim 1, 2 or 3, wherein each of said multiple of fan exit guide vanes (50) include a pivotable portion (66P) rotatable about said axis of rotation (A) relative to a fixed portion (66F).

5. The engine (10) as recited in claim 4, wherein said pivotable portion (66P) includes a leading edge flap.

6. The engine (10) as recited in any preceding claim, wherein said controller (C) is operable to control said fan nozzle exit area (44) to reduce a fan instability.

7. The engine (10) as recited in any preceding claim, wherein said gear system defines a gear reduction ratio of greater than or equal to about 2.5.

8. The engine (10) as recited in any preceding claim, wherein said fan bypass airflow (B) defines a bypass ratio greater than ten.

## Patentansprüche

1. Gasturbinenmotor (10), umfassend:
eine Kerngondel (12), die um eine Motormittelachse (A) definiert ist;
eine Lüftergondel (34), die mindestens teilweise um die Kerngondel (12) angebracht ist, um einen Lüfternebenstromluftstromweg (B) für einen Lüfternebenstromluftstrom (B) zu definieren, der ein Nebenstromverhältnis aufweist, das größer als sechs ist;
ein Getriebesystem, das durch einen Kernmotor innerhalb der Kerngondel angetrieben wird, um einen Lüfter innerhalb der Lüftergondel (34) anzutreiben,
wobei das Getriebesystem ein Untersetzungsverhältnis definiert, das größer oder gleich ungefähr 2,3 ist;
eine Lüfterdüse mit veränderlichem Querschnitt (42);
eine Mehrzahl von Lüfterauslassleitschaufeln (50), die mit dem Lüfternebenstromströmungsweg (B) in Verbindung stehen, wobei die Mehrzahl von Lüfterauslassleitschaufeln (50) um eine Drehachse (A) gedreht werden können; und
eine Steuerung (C), die betrieben werden kann, um die Lüfterdüse mit veränderlichem Querschnitt (42) zu steuern, um den Lüfterdüsenauslassquerschnitt zu verändern und das Druckverhältnis des Lüfternebenstromluftstroms (B) anzupassen;
**dadurch gekennzeichnet, dass**:
das Lüfterdruckverhältnis geringer als 1,45 bei einem Flug mit Mach 0,8 auf 35.000 Fuß (10.668 m) ist;
der Lüfter eine korrigierte Lüfterspitzendrehzahl von weniger als 1150 Fuß/Sekunde (350,5 m/s) definiert;
die Lüfterdüse mit veränderlichem Querschnitt (42) axial in Bezug auf die Lüftergondel (34) bewegt werden kann, um einen Lüfterdüsenauslassquerschnitt zu verändern und ein Druckverhältnis des Lüfternebenstromluftstroms (B) während des Motorbetriebs anzupassen; und
die Steuerung (C) betrieben werden kann, um den Lüfterdüsenauslassquerschnitt (44) bei einem Reiseflugzustand zu verringern.

2. Motor (10) nach Anspruch 1, wobei die Mehrzahl von Lüfterauslassleitschaufeln (50) gleichzeitig gedreht werden können.

3. Motor (10) nach Anspruch 1 oder 2, wobei die Mehrzahl von Lüfterauslassleitschaufeln (50) innerhalb einer Motorgehäusezwischenstruktur angebracht sind.

4. Motor (10) nach Anspruch 1, 2 oder 3, wobei jede der Mehrzahl von Lüfterauslassleitschaufeln (50) einen schwenkbaren Abschnitt (66P) beinhaltet, der um die Drehachse (A) in Bezug auf einen feststehenden Abschnitt (66F) gedreht werden kann.

5. Motor (10) nach Anspruch 4, wobei der schwenkbare Abschnitt (66P) eine Vorderkantenklappe beinhaltet.

6. Motor (10) nach einem der vorhergehenden Ansprüche, wobei die Steuerung (C) betrieben werden kann, um den Lüfterdüsenauslassquerschnitt (44) zu steuern, um eine Lüfterinstabilität zu verringern.

7. Motor (10) nach einem der vorhergehenden Ansprüche, wobei das Getriebesystem ein Untersetzungsverhältnis definiert, das größer oder gleich ungefähr 2,5 ist.

8. Motor (10) nach einem der vorhergehenden Ansprüche, wobei der Lüfternebenstromluftstrom (B) ein Nebenstromverhältnis definiert, das größer als zehn ist.

## Revendications

1. Turbomoteur (10) comprenant :
une nacelle centrale (12) définie autour d'un axe central de moteur (A) ;
une nacelle de soufflante (34) montée au moins partiellement autour de ladite nacelle centrale (12) pour définir un chemin d'écoulement d'air de dérivation de soufflante (B) pour un écoulement d'air de dérivation de soufflante (B) ayant un rapport de dérivation supérieur à six ;
un système d'engrenage entraîné par un moteur central à l'intérieur de la nacelle centrale pour entraîner une soufflante à l'intérieur de la nacelle de soufflante (34), dans lequel ledit système d'engrenage définit un rapport de réduction d'engrenage supérieur ou égal à environ 2,3 ;
une buse à section variable de soufflante (42) ;
une pluralité d'aubes de guidage de sortie de soufflante (50) en communication avec ledit chemin d'écoulement de dérivation de soufflante (B), ladite pluralité d'aubes de guidage de sortie de soufflante (50) pouvant tourner autour d'un axe de rotation (A) ; et
un dispositif de commande (C) pouvant fonctionner pour commander la buse à section variable de soufflante (42) pour faire varier la zone de sortie de buse de soufflante et régler le rapport de pression de l'écoulement d'air de dérivation de soufflante (B) ; **caractérisé en ce que** :
le rapport de pression de soufflante est inférieur à 1,45 en vol de croisière à 0,8 Mach et 35 000 pieds (10 668 m) ;
ladite soufflante définit une vitesse de pointe de soufflante corrigée inférieure à 1 150 pieds/seconde (350,5 m/s) ;
ladite buse à section variable de soufflante (42) est mobile axialement par rapport à ladite nacelle de soufflante (34) pour faire varier une zone de sortie de buse de soufflante et régler un rapport de pression de l'écoulement d'air de dérivation de soufflante (B) pendant le fonctionnement de moteur ; et
ledit dispositif de commande (C) peut fonctionner pour réduire ladite zone de sortie de buse de soufflante (44) dans une condition de vol de croisière.

2. Moteur (10) selon la revendication 1, dans lequel ladite pluralité d'aubes de guidage de sortie de soufflante (50) peuvent tourner simultanément.

3. Moteur (10) selon la revendication 1 ou 2, dans lequel ladite pluralité d'aubes de guidage de sortie de soufflante (50) sont montées à l'intérieur d'une structure de carter de moteur intermédiaire.

4. Moteur (10) selon la revendication 1, 2 ou 3, dans lequel chacune de ladite pluralité d'aubes de guidage de sortie de soufflante (50) comportent une partie pivotante (66P) pouvant tourner autour dudit axe de rotation (A) par rapport à une partie fixe (66F).

5. Moteur (10) selon la revendication 4, dans lequel ladite partie pivotante (66P) comporte un volet de bord d'attaque.

6. Moteur (10) selon une quelconque revendication précédente, dans lequel ledit dispositif de commande (C) peut fonctionner pour commander ladite zone de sortie de sortie de buse de soufflante (44) pour réduire une instabilité de soufflante.

7. Moteur (10) selon une quelconque revendication précédente, dans lequel ledit système d'engrenage définit un rapport de réduction d'engrenage supérieur ou égal à environ 2,5.

8. Moteur (10) selon une quelconque revendication précédente, dans lequel ledit écoulement d'air de dérivation de soufflante (B) définit un rapport de dérivation supérieur à dix.
